# EUROPEAN PATENT APPLICATION

(11) **EP 1 901 491 A1**
(43) Date of publication of application: **19.03.2008**
(21) Application number: 06019092.3
(22) Date of filing: 12.09.2006
(51) Int. Cl.: H04L 12/56

(54) **Link adaptation dependent control signaling**

(71) Applicant: MATSUSHITA ELECTRIC INDUSTRIAL CO., LTD., Osaka 571-8501 (JP)
(72) Inventor: Wengerter, Christian, c/o Panasonic R&D Centre, 63225 Langen (DE)
(74) Representative: Grünecker, Kinkeldey, Stockmair & Schwanhäusser Anwaltssozietät

(57) **Abstract**

The invention relates to a method and apparatus for providing an improved scheme for encoding control information for transmitting user data. Further the method and apparatus may allow for reducing the control signaling overhead. These advantages may be achieved by interpreting information on at least one link adaptation parameter for transmitting the user data to determine the at least one link adaptation parameter for transmitting the user data, wherein the at least one link adaptation parameter for transmitting the user data is comprised in control signaling. According to the invention the interpretation of the information depends on at least one link adaptation parameter employed for transmitting the control signaling.

## Description

### FIELD OF THE INVENTION

The invention relates to a method and apparatus for providing an improved scheme for encoding control information for transmitting user data.

### TECHNICAL BACKGROUND

### Packet-Scheduling and Shared Channel Transmission

In wireless communication systems employing packet-scheduling, at least part of the air-interface resources are assigned dynamically to different users (mobile stations - MS). Those dynamically allocated resources are typically mapped to at least one shared data channel (SDCH). A shared data channel may for example have one of the following configurations:
- One or multiple codes in a CDMA (Code Division Multiple Access) system are dynamically shared between multiple MS.
- One or multiple subcarriers (subbands) in an OFDMA (Orthogonal Frequency Division Multiple Access) system are dynamically shared between multiple MS.
- Combinations of the above in an OFCDMA (Orthogonal Frequency Code Division Multiplex Access) or a MC-CDMA (Multi Carrier-Code Division Multiple Access) system are dynamically shared between multiple MS.

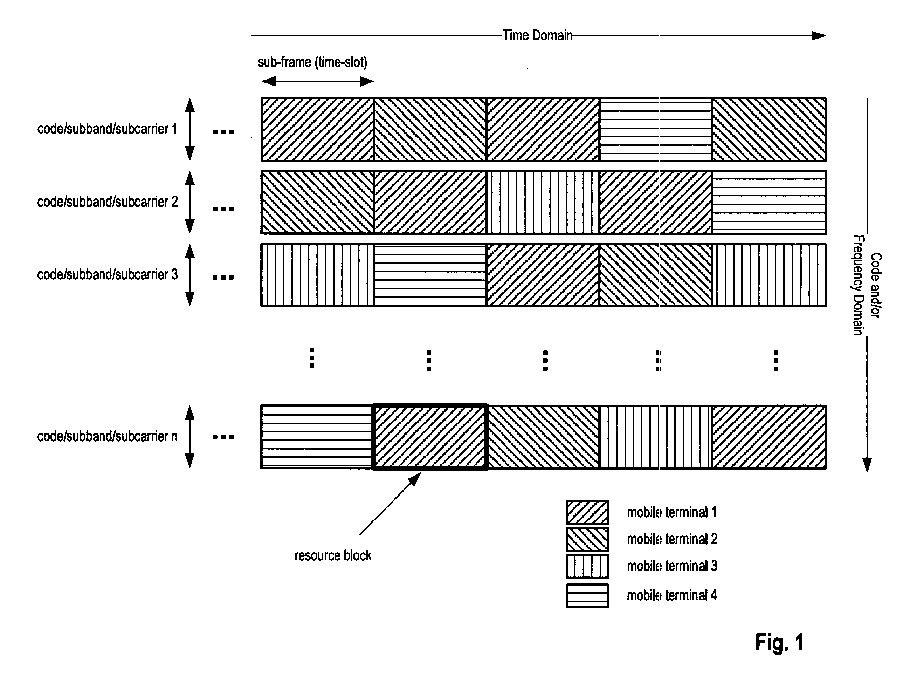

Fig. 1 shows a packet-scheduling system on a shared channel for systems with a single shared data channel. A sub-frame (also referred to as a time slot) reflects the smallest interval at which the scheduler (e.g. the Physical Layer or MAC Layer Scheduler) performs the dynamic resource allocation (DRA). In Fig. 1, a TTI (transmission time interval) equal to one sub-frame is assumed. It should be born noted that generally a TTI may also span over multiple sub-frames.

Further, the smallest unit of radio resources (also referred to as a resource block or resource unit), which can be allocated in OFDM systems, is typically defined by one sub-frame in time domain and by one subcarrier/subband in the frequency domain. Similarly, in a CDMA system this smallest unit of radio resources is defined by a sub-frame in the time domain and a code in the code domain.

In OFCDMA or MC-CDMA systems, this smallest unit is defined by one sub-frame in time domain, by one subcarrier/subband in the frequency domain and one code in the code domain. Note that dynamic resource allocation may be performed in time domain and in code/frequency domain.

The main benefits of packet-scheduling are the multi-user diversity gain by time domain scheduling (TDS) and dynamic user rate adaptation.

Assuming that the channel conditions of the users change over time due to fast (and slow) fading, at a given time instant the scheduler can assign available resources (codes in case of CDMA, subcarriers/subbands in case of OFDMA) to users having good channel conditions in time domain scheduling.

### Specifics of DRA and Shared Channel Transmission in OFDMA

Additionally to exploiting multi-user diversity in time domain by Time Domain Scheduling (TDS), in OFDMA multi-user diversity can also be exploited in frequency domain by Frequency Domain Scheduling (FDS). This is because the OFDM signal is in frequency domain constructed out of multiple narrowband subcarriers (typically grouped into subbands), which can be assigned dynamically to different users. By this, the frequency selective channel properties due to multi-path propagation can be exploited to schedule users on frequencies (subcarriers/subbands) on which they have a good channel quality (multi-user diversity in frequency domain).

For practical reasons in an OFDMA system the bandwidth is divided into multiple subbands, which consist out of multiple subcarriers. I.e. the smallest unit on which a user may be allocated would have a bandwidth of one subband and a duration of one sub-frame (which may correspond to one or multiple OFDM symbols), which is denoted as a resource block (RB). Typically a subband consists of consecutive subcarriers. However in some case it is desired to form a subband out of distributed non-consecutive subcarriers. A scheduler may also allocate a user over multiple consecutive or non-consecutive subbands and/or sub-frames.

For the 3GPP Long Term Evolution (see 3GPP TR 25.814: "Physical Layer Aspects for Evolved UTRA", Release 7, v. 7.0.0, June 2006 - available at http://www.3gpp.org and incorporated herein by reference), a 10 MHz system may consist out of 600 subcarriers with a subcarrier spacing of 15 kHz. The 600 subcarriers may then be grouped into 24 subbands (a 25 subcarriers), each subband occupying a bandwidth of 375 kHz. Assuming, that a sub-frame has a duration of 0.5 ms, a resource block (RB) would span over 375 kHz and 0.5 ms according to this example.

In order to exploit multi-user diversity and to achieve scheduling gain in frequency domain, the data for a given user should be allocated on resource blocks on which the users have a good channel condition. Typically, those resource blocks are close to each other and therefore, this transmission mode is in also denoted as localized mode (LM).

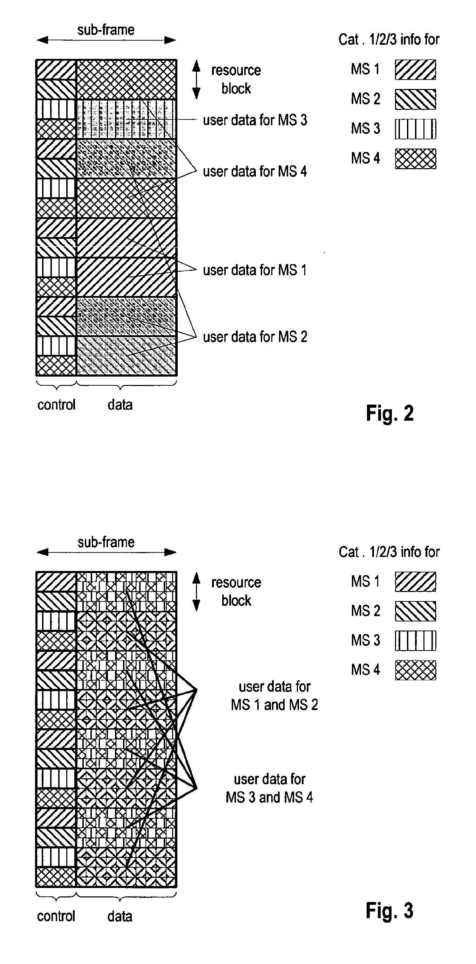

An example for a localized mode channel structure is shown in Fig. 2. In this example neighboring resource blocks are assigned to four mobile stations (MS1 to MS4) in the time domain and frequency domain. Each resource block consists of a portion for carrying Layer 1 and/or Layer 2 control signaling and a portion carrying the user data for the mobile stations.

Alternatively, the users may be allocated in a distributed mode (DM) as shown in Fig. 3. In this configuration a user (mobile station) is allocated on multiple resource blocks, which are distributed over a range of resource blocks. In distributed mode a number of different implementation options are possible. In the example shown in Fig. 3, a pair of users (MSs1/2 and MSs 3/4) share the same resource blocks. Several further possible exemplary implementation options may be found in 3GPP RAN WG#1 Tdoc R1-062089, "Comparison between RB-level and Sub-carrier-level Distributed Transmission for Shared Data Channel in E-UTRA Downlink", August 2006 (available at http://www.3gpp.org and incorporated herein by reference)

It should be noted, that multiplexing of localized mode and distributed mode within a sub-frame is possible, where the amount of resources (RBs) allocated to localized mode and distributed mode may be fixed, semi-static (constant for tens/hundreds of sub-frames) or even dynamic (different from sub-frame to sub-frame).

In localized mode as well as in distributed mode in - a given sub-frame - one or multiple data blocks (which are inter alia referred to as transport-blocks) may be allocated separately to the same user (mobile station) on different resource blocks, which may or may not belong to the same service or Automatic Repeat reQuest (ARQ) process. Logically, this can be understood as allocating different users.

### Link Adaptation

In mobile communication systems link adaptation is a typical measure to exploit the benefits resulting from dynamic resource allocation. One link adaptation technique is AMC (Adaptive Modulation and Coding). Here, the data-rate per data block or per scheduled user is adapted dynamically to the instantaneous channel quality of the respective allocated resource by dynamically changing the modulation and coding scheme (MCS) in response to the channel conditions. This requires may require a channel quality estimate at the transmitter for the link to the respective receiver. Typically hybrid ARQ (HARQ) techniques are employed in addition. In some configurations it may also make sense to use fast/slow power control.

### L1/L2 Control Signaling

In order to inform the scheduled users about their resource allocation status, transport format and other user data related information (e.g. HARQ), Layer 1/Layer 2 (L1/L2) control signaling is transmitted on the downlink (e.g. together with the user data).

Generally, the information sent on the L1/L2 control signaling may be separated into the following two categories. Shared Control Information (SCI) carrying Cat. 1 information and Dedicated Control Information (DCI) carrying Cat. 2/3 as for example specified in the above mentioned 3GPP TR 25.814 (see page 29, Table 7.1.1.2.3.1-1 Downlink scheduling information required by a UE):

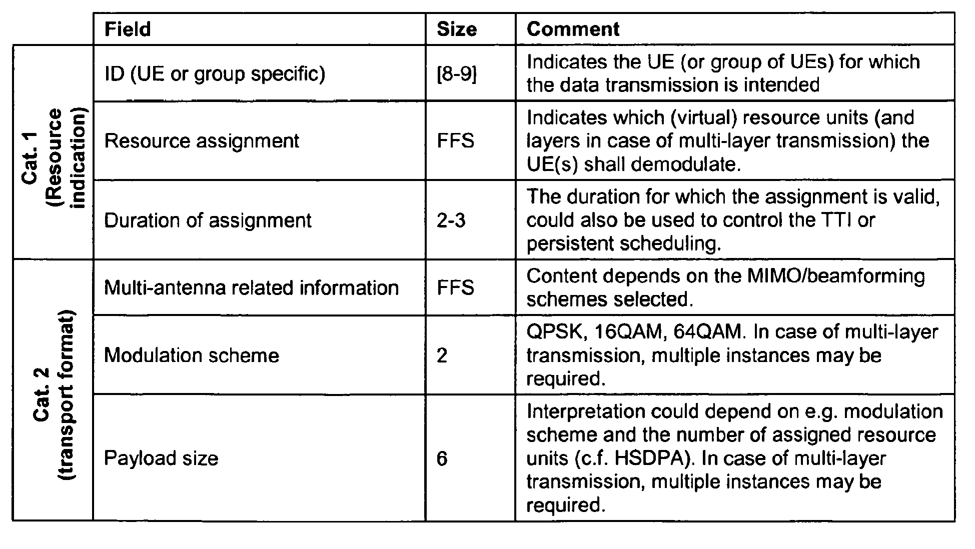

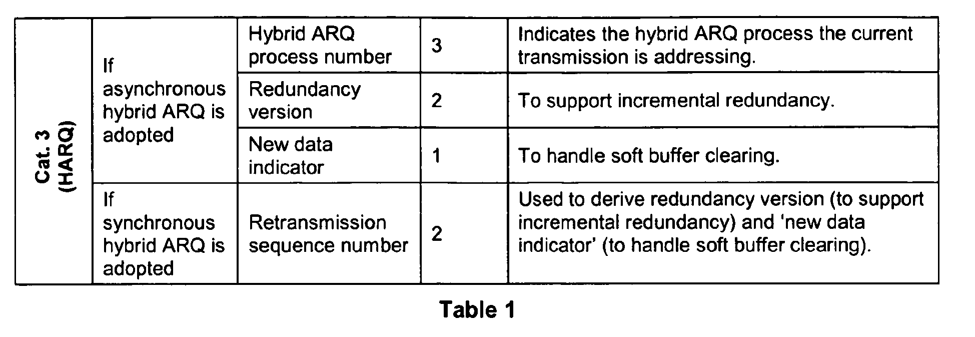

The following table is intended to exemplarily illustrate how the encoded L1/L2 control signaling information may be mapped to modulation scheme and coding rate (or payload size):

**Table 2**

| **MCS** | **Modulation Scheme Indicator** | **Modulation Scheme** | **Payload Size Indicator** | **Code Rate** | **Payload (One RB allocated)** | **Payload (*M PBs* allocated)** |
|---|---|---|---|---|---|---|
| 1 | **00** | QPSK | **00** | 0.2 | 50 | *M x* 50 |
| 2 | **00** | QPSK | **01** | 0.4 | 100 | *M x* 100 |
| 3 | **00** | QPSK | **10** | 0.6 | 150 | *M x* 150 |
| 4 | **00** | QPSK | **11** | 0.8 | 200 | *M x* 200 |
| 5 | **01** | 16-QAM | **00** | 0.5 | 250 | *M x* 250 |
| 6 | **01** | 16-QAM | **01** | 0.6 | 300 | *M x* 300 |
| 7 | **01** | 16-QAM | **10** | 0.7 | 350 | *M x* 350 |
| 8 | **01** | 16-QAM | **11** | 0.8 | 400 | *M x* 400 |
| 9 | **10** | 64-QAM | **00** | 0.6 | 450 | *M x* 450 |
| 10 | **10** | 64-QAM | **01** | 0.7 | 525 | *M x* 525 |
| 11 | **10** | 64-QAM | **10** | 0.8 | 600 | *M x* 600 |
| 12 | **10** | 64-QAM | **11** | 0.9 | 675 | *M x* 675 |

In order to limit the rows to a reasonable number, it has been assumed that in total only 4 bits is used for signaling the modulation scheme indicator and the payload size indicator (2 bits each). The table shows the possible bit patterns (marked in bold letters) that indicate modulation scheme (Modulation Scheme Indicator) and payload size (Payload Size Indicator). The bit pattern "0000" thus represents the modulation and coding scheme having the lowest spectral efficiency and rate, while the bit pattern "1011" indicates the modulation and coding scheme having the highest spectral efficiency and rate.

Since the L1/L2 control signaling information may be included in each sub-frame, an efficient coding of the L1/L2 control signaling is desirable in order to reduce the control signaling overhead.

### SUMMARY OF THE INVENTION

A main object of the invention is to suggest an improved scheme for encoding control information related to the transmission of user data. A further object is to reduce the control signaling overhead.

The main object is solved by the subject matter of the independent claims. Advantageous embodiments of the invention are subject matters of the dependent claims.

One main aspect of the invention is to interpret information on link adaptation for transmitting the user data comprised in control signaling depending on at least one link adaptation parameter employed for transmitting the control signaling.

According to an exemplary embodiment of the invention a method is provided in which information on at least one link adaptation parameter for transmitting the user data is interpreted e.g. to determine the at least one link adaptation parameter for transmitting the user data. Thereby, the at least one link adaptation parameter for transmitting the user data is comprised in control signaling and the interpretation of the information depends on at least one link adaptation parameter employed for transmitting the control signaling.

According to a further embodiment of the invention, a receiving entity may receive the control signaling, and may determine the at least one link adaptation parameter for transmitting the user data from the control signaling as described above. Next, the receiving entity may receive the user data using the determined at least one link adaptation parameter for transmitting the user data. Alternatively, the receiving entity may also transmit the user data using the determined at least one link adaptation parameter for transmitting the user data.

In addition to the control signaling, another embodiment of the invention suggests that control data may be received that comprises link adaptation information defining the at least one link adaptation parameter employed for transmitting the control signaling. In this exemplary embodiment, the transmission of control signaling is also subject to link adaptation so that it may be advantageous to signal the used link adaptation for the control signaling to a receiving entity by means of another control data (e.g. broadcasted on a broadcast channel). In a variation of this embodiment, the link adaptation parameters used for the control signaling may depend in the resources on which the control signaling is mapped in order to reduce the control data on the broadcast channel. For example, these resources can be configured in a semi-static way.

Alternatively, another embodiment of the invention foresees that blind detection of the control signaling is used by a receiving entity by blindly detecting the link adaptation parameters used for the control signaling. This may have the advantage that no additional control data may need to be signaled and thus no additional overhead for indicating the link adaptation used for the control signaling is necessary. Blind detection may for example be advantageous, if the number of possible link adaptations is limited to a predetermined number so that the reception of the control signaling utilizing blind detection does not imply an unacceptable burden in terms of processing capability and power usage for a mobile receiving entity.

According to a further embodiment of the invention, the at least one link adaptation parameter for transmitting the user data comprises at least one of at least one adaptive modulation and coding scheme parameter, a payload size parameter, at least one transmission power control parameter, at least one MIMO (Multiple Input Multiple Output) parameter and at least one hybrid automatic repeat request parameter.

In a more specific exemplary embodiment of the invention, the at least one adaptive modulation and coding scheme parameter indicates the modulation scheme and the coding rate (or payload size) used for transmitting the user data.

In some embodiments of the invention the modulation scheme and the coding rate may be jointly encoded in a single bit pattern within the control signaling. In some cases, this may have the advantage to reduce the number of bits required to indicate modulation scheme and the coding rate. Alternatively, also the modulation scheme and the payload size may be jointly encoded in a single bit pattern.

According to another embodiment of the invention the at least one link adaptation parameter employed for transmitting the control signaling is the modulation and coding scheme and/or the transmission power level used for transmitting the control signaling.

Moreover, in another embodiment of the invention the control signaling comprises a bit pattern indicating the at least one link adaptation parameter for transmitting the user data. This bit pattern may be mapped to link adaptation parameters usable for transmitting the user data to the receiving entity. The mapping may thereby depend on the at least one link adaptation parameter employed for transmitting the control signaling.

In a further embodiment of the invention, plural link adaptation tables or equations are maintained at a receiving entity and/or transmitting entity. Each link adaptation table or equation defines the mapping of available bit patterns to link adaptation parameters usable for transmitting the user data, wherein the mapping depends on the at least one link adaptation parameter employed for transmitting the control signaling.

In a variation of the embodiment the mapping of the bit pattern to link adaptation parameters usable for transmitting the user data is performed according to a selected one of the plural link adaptation tables or equations for determining the at least one link adaptation parameter. The selection of the appropriate link adaptation table or equation may depend on the at least one link adaptation parameter employed for transmitting control signaling.

In another variation of the embodiment, the values representable by the bit pattern cover only a subset of all possible sets of the at least on link adaptation parameter for transmitting the user data. Further, the covered subset may depend on the at least one link adaptation parameter used for transmitting the control signaling.

Another embodiment of the invention may allow a more efficient encoding of link adaptation parameters. According to this embodiment the at least one link adaptation parameter for transmitting the control signaling is the modulation and coding scheme used for transmitting the control signaling and the bit pattern in the control signaling is mapped to link adaptation parameters covering a range of spectral efficiencies for the transmission of the user data similar or higher than the spectral efficiency yielded by the modulation and coding scheme for transmitting the control signaling. The bit pattern does thus not cover all possible link adaptation parameters that could be used for transmitting the user data, but only provides an index to a subset of the link adaptation parameters. This may have the advantage that fewer bits are needed to indicate the appropriate link adaptation since not all possible link adaptation parameters that could be used for transmitting the user data need to be indexed.

In another embodiment of the invention, a link adaptation table or equation defining said mapping of a respective bit pattern to respective usable link adaptation parameters comprises a given number of mappings. In this embodiment, the granularity of the step size between spectral efficiencies yielded by a first mapping and another second mapping out of plural mappings covering a range of spectral efficiencies for the transmission of the user data around the spectral efficiency yielded by the modulation and coding scheme for transmitting the control signaling is higher (or alternatively lower) than that for mappings to link adaptation parameters for the transmission of the user data outside said range.

Another embodiment of the invention relates to an apparatus comprising a processing unit for interpreting information on at least one link adaptation parameter for transmitting the user data to determine said at least one link adaptation parameter for transmitting the user data, wherein the at least one link adaptation parameter for transmitting the user data is comprised in control signaling. The processing unit may be adapted to interpret said information dependent on at least one link adaptation parameter employed for transmitting the control signaling. The apparatus may for example be a base station or a mobile terminal.

The apparatus according to another embodiment of the invention may further comprise a receiver for receiving said control signaling comprising information on the at least one link adaptation parameter for transmitting the user data at a receiving entity, and for the user data using the determined at least one link adaptation parameter for transmitting the user data.

The apparatus according to a further embodiment of the invention comprises a receiver for receiving said control signaling comprising information on the at least one link adaptation parameter for transmitting the user data at a receiving entity, and a transmitter for transmitting the user data using the determined at least one link adaptation parameter for transmitting the user data.

Further, according to an embodiment of the invention the apparatus is capable of performing the steps of the method of interpreting control signaling according to one of the various embodiments of the invention and their variations described herein.

Another embodiment of the invention relates to a computer-readable medium storing instructions that, when executed by a processor of an apparatus, cause the apparatus to interpret information on at least one link adaptation parameter for transmitting the user data to determine said at least one link adaptation parameter for transmitting the user data, wherein the at least one link adaptation parameter for transmitting the user data is comprised in control signaling. The interpretation of said information may depend on at least one link adaptation parameter employed for transmitting the control signaling.

The computer-readable medium according another embodiment of the invention may further store instructions that when executed by the processor cause the apparatus to perform the steps of the method of interpreting control signaling according to one of the various embodiments of the invention and their variations described herein.

### BRIEF DESCRIPTION OF THE FIGURES

In the following the invention is described in more detail in reference to the attached figures and drawings. Similar or corresponding details in the figures are marked with the same reference numerals.
- **Fig. 1**: shows an exemplary channel structure of an OFDMA system and a dynamic allocation of radio resources on a transmission time interval basis to different users, and
- **Fig. 2**: shows an exemplary data transmission to users in an OFDMA system in localized mode (LM) having a distributed mapping of L1/L2 control signaling,
- **Fig. 3**: shows an exemplary data transmission to users in an OFDMA system in distributed mode (DM) having a distributed mapping of L1/L2 control signaling,
- **Fig. 4**: shows an example of for AMC-controlled L1/L2 control signaling according to an embodiment of the invention,
- **Fig. 5**: shows an example of for AMC-controlled L1/L2 control signaling with MCS-dependent Cat. 2 control information according to an embodiment of the invention,
- **Fig. 6**: shows an illustrative example for adjusting the MCS granularity for user data transmissions depending on the modulation and coding scheme used for L1/L2 control signaling according to an embodiment of the invention,
- **Fig. 7**: shows an illustrative example of a definition of different ranges of MCS levels in response to the modulation and coding scheme used for L1/L2 control signaling according to one embodiment of the invention,
- **Fig. 8 and 9**: show different examples for coding different categories of L1/L2 control signaling according to one embodiment of the invention and
- **Fig. 10**: shows a mobile communication system according to one embodiment of the invention in which the ideas of the invention may be implemented.

### DETAILED DESCRIPTION OF THE INVENTION

One aspect of the invention is to interpret the content of control signaling for the transmission of user data depending on at least one parameter of the link adaptation used for transmitting the control signaling. Another aspect of the invention is to vary the granularity of link adaptations in a set of link adaptations that defines the link adaptations that can be used for user data transmission according to at least one link adaptation parameter used for transmitting the control signaling. These two aspects may be realized in a mobile communication system for uplink or downlink user data transmission separately or combined.

Generally, it should be understood that the control signaling information may be considered a pointer to the location of a data block comprising user data for an individual user within the data part of a subframe (or a number of consecutive subframes). In other words, the control data may indicate to a user whether and, if applicable, which resource block(s) are assigned to the mobile station (user), which transport format (link adaptation) is used for transmitting the user data destined to the mobile station, etc.

In an exemplary embodiment, it is assumed that link adaptation (e.g. adaptive modulation and coding) is performed for both, user data and its related control signaling. The control signaling indicates the link adaptation used for transmitting the user data (e.g. the used modulation and coding scheme and the coding rate/payload size) and may thus enable the receiving entity (e.g. mobile station or base station) to receive (e.g. demodulate and decode) the user data. When interpreting the link adaptation information in the control signaling specifying the link adaptation for the user data, the link adaptation that is used for control signaling is taken into account.

For example, in an exemplary embodiment of the invention, the receiving entity is a mobile station that is located in a radio cell region allowing for use of a modulation and coding scheme with low spectral efficiency (e.g. lower order modulation scheme like QPSK and comparably low payload size per resource block or coding rate yielding an overall low user data rate/spectral efficiency). It is likely that the modulation and coding scheme that is chosen by the transmitting entity (such as a base station or access point in a radio access network) for the user data will not significantly differ from the modulation and coding scheme used for transmitting the user data related control signaling. Consequently, in line with the idea of the first aspect of the invention, in one embodiment of the invention the control signaling may not indicate the full range of possible link adaptations that could be theoretically used for transmitting the user data, but is mapped to a range of possible link adaptations that is likely for the transmission of user data.

If for example the possible link adaptations allow for use of a QPSK, 16-QAM and 64-QAM modulations scheme with a coding rate between 0.1 and 1.0 (e.g. in 0.1 increments) respectively and QPSK at a coding rate of 0.4 is used for transmitting the control signaling, link adaptations yielding parameters of QPSK and a coding rate of 0.1 and 0.3 are not likely to be used for transmitting the user data (especially. when assuming that the control signaling should be signaled more reliable than the related user data). Hence, the bits in the control signaling indicating the modulation and coding scheme may not cover these link adaptations. Similarly, also link adaptations yielding a 64-QAM and coding rates between 0.3 and 1.0 may be most likely not used for the transmission of the user data, if QPSK at a coding rate of 0.4 is used for transmitting the control signaling. Hence, also these link adaptations may not be covered by the control signaling. Accordingly, when interpreting the information on the modulation and coding scheme in the control signaling, the information (e.g. bit pattern) may only be mapped to modulation and coding schemes likely to be used for the user data in view of the modulation and coding scheme used for the control signaling. In the example, the bit pattern in the control signaling indicating the modulation and coding scheme for the user data may thus only be interpreted to relate to link adaptations within a range of {QPSK, coding rate 0.4} and {64-QAM; coding rate 0.2}.

A similar example could also be made for scenarios where the control signaling is subject to fast and/or slow transmission power control. Accordingly, the link adaptation parameters for the data contained in the control signaling could be interpreted depending on the transmission power level used for transmitting the control signaling, such that the control signaling is only mapped to link adaptations yielding a spectral efficiency likely to be used for transmitting the user data.

In one specific embodiment of the invention, the control signaling information indicating the transport format (e.g. modulation scheme and coding rate/payload size) for the user data (e.g. Cat. 2 information as will be defined below) is made dependent on the link adaptation employed for the L1/L2 control signaling. This means that the interpretation of the control signaling information depends the modulation and coding scheme and/or power level applied to the L1/L2 control signaling.

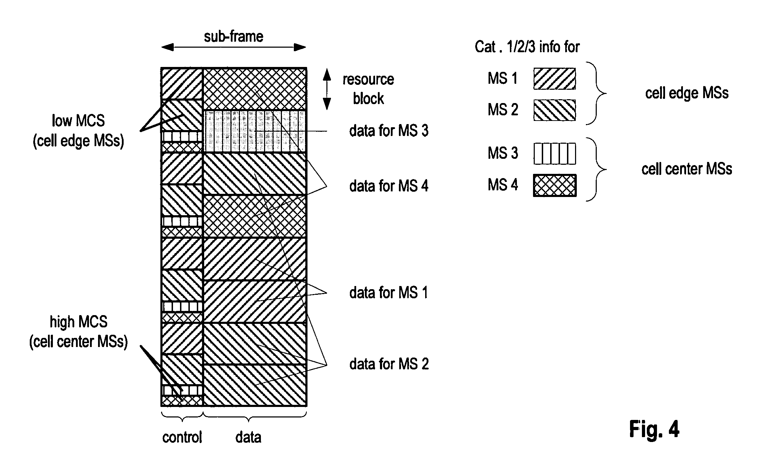

In another embodiment of the invention, AMC and power control may be applied to the L1/L2 control signaling, i.e. the L1/L2 control signaling to a mobile station close to the cell center (high geometry/SINR) might be transmitted with low power and/or an high MCS level, whereas the L1/L2 control signaling to a MS close to the cell edge (low geometry/SINR) might be transmitted with high power and/or a low MCS level. Fig. 4 shows an example of for AMC-controlled L1/L2 control signaling according to an embodiment of the invention. It is assumed for exemplary purposes that the number of L1/L2 control signaling information bits is identical (or similar) for high and low modulation and coding scheme levels. Therefore, more resources are needed for transmitting the control signaling with a low modulation and coding scheme, in order to maintain a constant block error rate for the control signaling.

If not performing blind detection, in order to correctly decode the L1/L2 control information, the mobile station needs to know the applied modulation and coding scheme. In this case, this control information may be sent on a broadcast channel. This may be considered control signaling for the L1/L2 control signaling. Therefore, in some cases this control data for the control signaling is also referred to as Cat. 0 information. Alternatively, the receiving entity may perform a blind detection of the modulation and coding scheme level. In order to keep the complexity within reasonable limits, the number of available modulation and coding scheme levels for the control signaling may be kept small (e.g. 2-6).

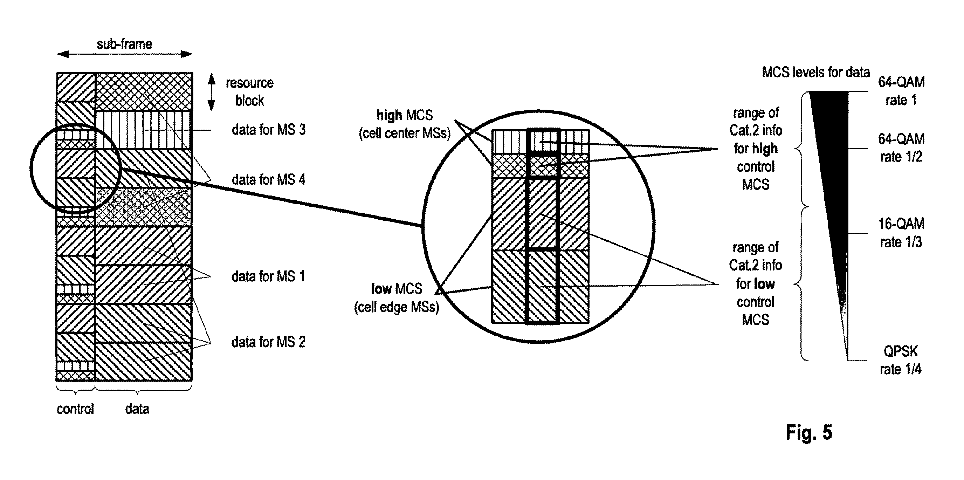

Fig. 5 shows an example for AMC-controlled L1/L2 control signaling with MCS-dependent Cat. 2 control information according to an embodiment of the invention. Please note that the general sub-frame structure is similar to that shown in Fig. 4. The bold blocks in the magnification in the middle of the figure illustrate the Cat. 2 information of control signaling for the respective mobile station. For exemplary purposes, it is assumed that user data and its related control signaling is multiplexed to a subframe as shown on the left hand side of the figure. If a low (high) MCS scheme is used for the L1/L2 control signaling only a MCS scheme from the lower (higher) region of the available MCS schemes for data is signaled in the control information (see right hand side). In this example, "low" means low data-rate MCS levels and "high" means high data-rate MCS level, respectively.

In this exemplary embodiment, it is thus possible to consider the geometries/SINR (Signal to Interference-plus-Noise Ratio) state of the mobile stations. For example, mobile stations MS1 and MS2 may for example be located at the cell edge of a radio cell which is assumed to imply that radio channel quality is lower compared to mobile stations MS3 and MS4, which are supposed to be located near the radio cell center. In order to securely transmit the control signaling, MS1 and MS2 are thus assigned more resources on the control channel part of the subframe in terms of frequency (and/or code) i.e. a low rate MCS is used for the control signaling, while MS3 and MS4 having better channel quality receive the control signaling with a higher MCS level. Accordingly, it is assumed that also the user data for MS3 and MS4 will employ an MCS level in an upper range of the available MCS levels, and MS1 and MS2 will employ an MCS level in a lower range of the available MCS levels. Accordingly, the control signaling information related to the MCS level (here, Cat. 2 information) for MS1 and MS2 is mapped to a different range of MSC levels than for MS3 and MS4.

According to another embodiment of the invention, taking into account the second aspect of the invention, the granularity of link adaptations in a set of possible link adaptations may be varied in response to the link adaptation used for the control signaling. Returning to the example above, QPSK at a coding rate of 0.4 is used for transmitting the control signaling. Since it is likely that the modulation and coding scheme used for the user data is within a certain range around this modulation and coding scheme of the control signaling, the granularity of the link adaptations within a given range around the link adaptation used for the control signaling may be increased. In the example above, the control signaling may indicate coding rates in 0.1 increments. In this embodiment of the invention, the granularity of this step size is varied for link adaptations in a range near to the link adaptation of the control signaling. For example, the bit pattern in the control signaling could be mapped to link adaptations with 0.05 increments for the coding rate in the range {QPSK; coding rate 0.2} to {QPSK; coding rate 0.8} and {16-QAM; coding rate 0.1} to {16-QAM; coding rate 0.4} while a 0.2 increment (or larger) for the coding rate is used for a range {16-QAM; coding rate 0.5} to {64-QAM; coding rate 1.0}. Hence, the mapping of the different possible values of the bit pattern for signaling the modulation and coding scheme for the user data is changed/defined according to the modulation and coding scheme (and/or transmission power) used for the control signaling.

As has become apparent from the above, one advantage of the embodiments described above may a reduction of the control signaling overhead by making its content dependent on the link adaptation (e.g. AMC, power control) applied to the control signaling transmission.

According to various embodiments of the invention, control signaling may comprise or consist of information identifying the link adaptation (to be) used for transmitting the user data. The control signaling may thus include information on the link adaptation parameters to be used for the transmission of user data. The information on the link adaptation parameters (or at least a part thereof) may be encoded within a bit pattern that is mapped to the respective parameters at the receiving entity.

In the examples shown in Fig. 2 and Fig. 3, the L1/L2 control signaling is multiplexed with the downlink user data in a sub-frame. In these examples it is assumed that resource allocation, transport format and other user data related information may change from sub-frame to sub-frame. Otherwise, the control signaling may not need to be multiplexed to the resource blocks in every sub-frame.

It should be noted that resource allocation for users may also be performed on a TTI (Transmission Time Interval) basis, where the TTI length is a multiple of a sub-frame. The TTI length may be fixed in a service area for all users, may be different for different users, or may even by dynamic for each user. In this variation, the L1/L2 control signaling may only be transmitted once per TTI. However, in some scenarios it may make sense to repeat the L1/L2 control signaling within a TTI in order to increase reliability of its successful reception. In most embodiments of the invention and their variations a constant TTI length of one sub-frame is assumed for exemplary purposed, however, the explanations are equally applicable to the various TTI configurations described above.

The multiplexing of control signaling and user data may for example be realized by TDM (Time Division Multiplex) as depicted in Fig. 2 and Fig. 3, FDM (Frequency Division Multiplex), CDM (Code Division Multiplex) or scattered the time frequency resources within a sub-frame.

According to some embodiments of the invention, the information within the control signaling may be separated into the categories shared control information (SCI) and dedicated control information (DCI). The SCI part of the control signaling may contain information related to the resource allocation (Cat. 1 information). For example, the SCI part may comprise the user identity indicating the user being allocated a resource, RB allocation information, indicating the resources (resource block(s)) allocated to the user. The number of resource blocks on which a user is allocated can be dynamic. Optionally the SCI may further include an indication of the duration of assignment, if an assignment over multiple sub-frames (or TTls) is possible in the system.

Depending on the setup of other channels in the communication system and the setup of the dedicated control information, the SCI may additionally contain information such as acknowledgments (ACK/NACK) for uplink transmission, uplink scheduling information, and/or information on the DCI (resource, MCS, etc.).

The DCI part of the control signaling may contain information related to the transmission format (Cat. 2 information) of the data transmitted to a scheduled user indicated by Cat. 1 information. Moreover, in case of application of (hybrid) ARQ, the DCI may also carry retransmission protocol related information (Cat. 3 information) such as (H)ARQ information. The DCI needs only to be decoded by the user(s) scheduled according to the Cat. 1 information.

The Cat. 2 information within the DCI may for example comprise information on at least one of the modulation scheme, the transport-block (payload) size (or coding rate), MIMO related information, etc. The Cat. 3 information may comprise HARQ related information, e.g. hybrid ARQ process number, redundancy version, retransmission sequence number. It should be noted that either the transport-block size (payload size) or the code rate can be signaled in the Cat. 2 information. In any case payload size and code rate can be calculated from each other by using the modulation scheme information and the resource information (number of allocated resource blocks).

The subsequent table shows an exemplary definition and overview of the content of the control signaling according to an exemplary embodiment of the invention. It should be noted that the size of the respective fields is only mentioned for exemplary purposes and to outline the potential benefits that can be achieved by employing the invention in the following.

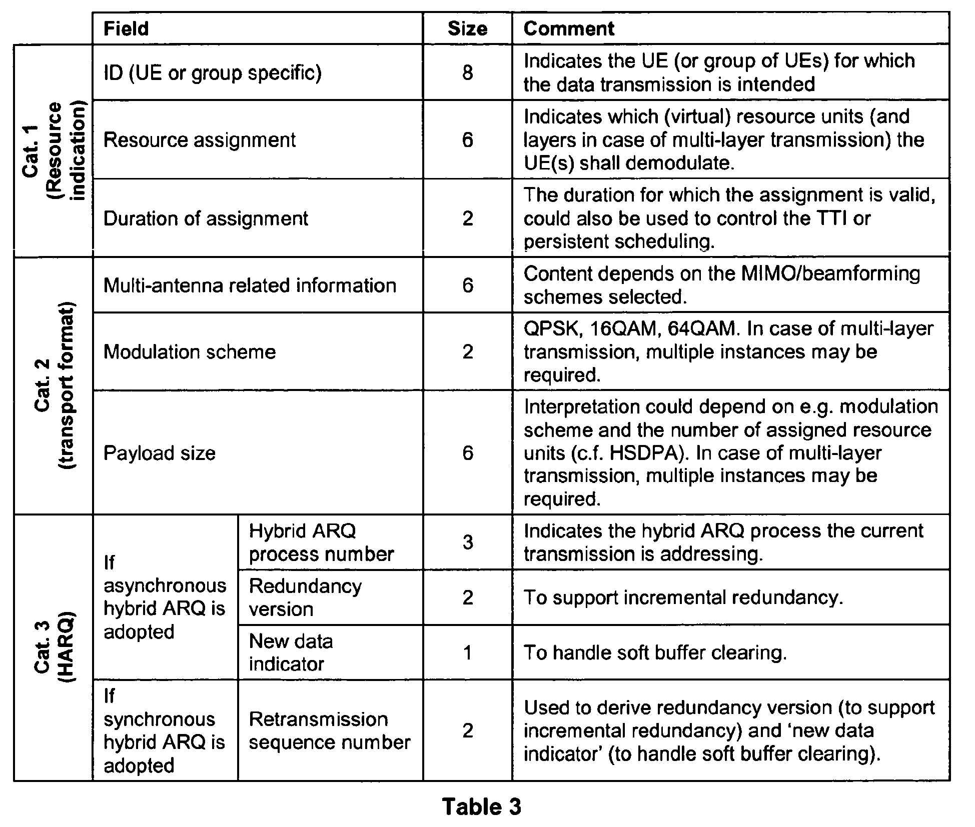

Another consideration is the selection of an appropriate coding format of the control signaling. According to one embodiment of the invention various coding formats are suggested to transmit the control signaling.

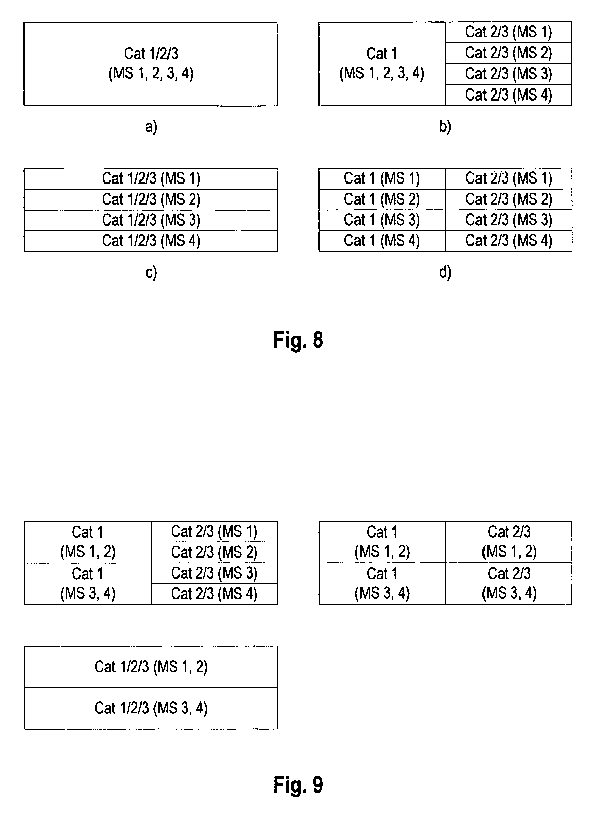

Fig. 8 and 9 show different examples for coding different categories of L1/L2 control signaling according to different embodiments of the invention. For example, Cat. 1, Cat. 2 and Cat. 3 information may be jointly encoded for multiple mobile stations (see Fig. 8 a)). Alternatively, the Cat. 1 information is jointly encoded for multiple mobile stations, but Cat. 2 and Cat. 3 information are separately encoded per mobile station as shown in Fig. 8 b). Another option is to encode Cat. 1, Cat. 2 and Cat. 3 information jointly for each mobile station as shown in Fig. 8 c). Another option shown in Fig. 8 d) is to encode Cat. 1, separately from Cat. 2 and Cat. 3 information for each mobile station.

It should be noted that for the case of encoding information of multiple mobile stations jointly, multiple code blocks for Cat. 1, Cat. 2 and Cat. 3 information may also be used as illustrated in Fig. 9. This option may for example be used to group users, e.g. according to their geometries/SINR state (e.g. cell center, cell edge).

Details on the coding and the mapping within a sub-frame of the different categories of L1/L2 control signaling for use in another exemplary embodiment of the invention may also be found in 3GPP RAN WG#1 Tdoc. R1-061672: "Coding Scheme of L1/L2 Control Channel for E-UTRA Downlink", June 2006 available at http://www.3gpp.org and incorporated herein by reference.

In some embodiments of the invention, the (L1/L2) control information is transmitted more reliable than the user data, since correct decoding of the control information may be a prerequisite to start demodulating and decoding of the user data. This typically implies that the target block error rate for the control signaling should be lower than the target block error rate for the user data. In case of employing (hybrid) ARQ, this assumption refers to the target block error rate for the first transmission.

In some scenarios this may in turn imply that the selected transport format/link adaptation (e.g. modulation and coding scheme) for the control signaling has a lower (or similar) spectral efficiency than the transmission format/link adaptation (e.g. selected modulation and coding scheme) for the related user data. It should be noted that there may be also scenarios where an opposite implication may be valid.

In some embodiments of the invention, the aspect of the relation between the link adaptation for control signaling and user data may be manifested as follows. For the data transmission hybrid ARQ may be employed, which allows for a more aggressive modulation and coding scheme selection (i.e. tendency to use higher modulation and coding scheme levels yielding a higher spectral efficiency). Due to the use of an efficient packet retransmission scheme like hybrid ARQ, it may be more efficient to transmit the data using multiple hybrid ARQ transmissions than choosing a lower modulation and coding scheme level.

Moreover, in typical scenarios the number of information bits to be transmitted for control signaling may be less than the number of bits for the data (packet). Therefore, it is likely that the forward error correction (FEC) coding applied to the control signaling is less efficient than the forward error correction coding for data. This reasoning may for example apply in case of employing different coding schemes for signaling and data, e.g. convolutional FEC coding for signaling and Turbo FEC coding for data, as well as for using the same FEC coding scheme, e.g. Turbo where FEC coding is less efficient for small code-block sizes than for large code-block sizes. In this context it should be also noted that for a given SINR higher coding with a lower rate is required to achieve a given block error rate.

Moreover, when e.g. employing OFDMA, control signaling may be mapped in a distributed mode, whereas the data might be mapped in a localized mode. This may result in less variance of log-likelihood ratios (obtained by demodulation) for the transmitted FEC coded bits for the data transmission, which in turn results in a better FEC decoding performance for most coding schemes, e.g. Turbo coding, LDPC coding, convolutional coding.

Taking the considerations above into account, Cat. 2 information may only need to provide the possibility to signal modulation and coding scheme levels similar (or slightly smaller in some cases) or larger than the modulation and coding scheme level used for transmitting the control signaling. According to one embodiment of the invention the number of bits for the Cat. 2 control signaling may be reduced. For example, the amount of bits indicating the modulation scheme can be reduced since it is not required to be able to signal the full range of available modulation schemes. Instead only part of the available modulation schemes may to be signaled. This allows using fewer bits for signaling. E.g. if three modulation schemes (QPSK, 16-QAM, 64-QAM) are available in the system, a conventional prior art scheme would need two bits for signaling the modulation scheme.

According to an embodiment of the invention the amount of signaling bits could be reduced to one bit by defining this bit as follows:
- If the control signaling is transmitted with MCS 1 to n, the modulation scheme bit indicates the modulation schemes QPSK or 16-QAM
- If the control signaling is transmitted with MCS *n*+1 to *N*, the modulation scheme bit indicates the modulation schemes 16-QAM or 64-QAM

This exemplary embodiment is exemplarily illustrated in the table below. It should be noted that - as it has been the case for Table 2 - for exemplary purposes only the Payload Size Indicator in Table 4 (as well as in Table 5) has two bits only in order to obtain a reasonable number of mappings (i.e. possible bit patterns) that can be represented in this document (assuming N possible modulation and coding schemes for control signaling).

**Table 4**

| **MCS of Control Signaling** | | **MCS** | **Modulation Scheme Indicator** | | **Modulation Scheme** | **Payload Size Indicator** | **Code Rate** | **Payload (One RB allocated)** | **Payload (M *RBs* allocated)** |
|---|---|---|---|---|---|---|---|---|---|
| **1 to *n*** | | 1 | **0** | | QPSK | **00** | 0.2 | 50 | *M x* 50 |
| **1 to *n*** | | 2 | **0** | | QPSK | **01** | 0.4 | 100 | *M x* 100 |
| **1 to *n*** | | 3 | **0** | | QPSK | **10** | 0.6 | 150 | *M x* 150 |
| **1 to *n*** | | 4 | **0** | | QPSK | **11** | 0.8 | 200 | *M x* 200 |
| **1 to *n*** | ***n*+1 to *N*** | 5 | **1** | **0** | 16-QAM | **00** | 0.5 | 250 | *M x* 250 |
| **1 to *n*** | ***n*+1 to *N*** | 6 | **1** | **0** | 16-QAM | **01** | 0.6 | 300 | *M x* 300 |
| **1 to *n*** | ***n*+1 to *N*** | 7 | **1** | **0** | 16-QAM | **10** | 0.7 | 350 | *M x* 350 |
| **1 to *n*** | ***n*+1 to *N*** | 8 | **1** | **0** | 16-QAM | **11** | 0.8 | 400 | *M x* 400 |
| ***n*+1 to *N*** | | 9 | **1** | | 64-QAM | **00** | 0.6 | 450 | *M x* 450 |
| ***n*+1 to *N*** | | 10 | **1** | | 64-QAM | **01** | 0.7 | 525 | *M x* 525 |
| ***n*+1 to *N*** | | 11 | **1** | | 64-QAM | **10** | 0.8 | 600 | *M x* 600 |
| ***n*+1 to *N*** | | 12 | **1** | | 64-QAM | **11** | 0.9 | 675 | *M x* 675 |

In Table 4 a new column is added (in comparison to Table 2) indicating the link adaptation (here the modulation and coding scheme) level of the control signaling. As can be seen from the table, the pit pattern to indicate modulation scheme and coding rate (or payload size) may be reduced to 3 bits (instead of 4 bits in Table 2) if the bit pattern is interpreted depending on the link adaptation of the control signaling.

Table 4 may also be considered consisting of two separate mapping tables. The first table contains mappings to MCSs levels 1 to 8 and is used in case the MCS level of the control signaling is between 1 and n. The second table contains mappings to MCSs levels 5 to 12 and is used if the MCS level of the control signaling is between n+1 and N. Hence, each of the two tables would comprise only a subset of the total available MCS levels 1 to 12 that could be used for transmitting the user data. Generally, multiple mapping tables may thus be defined for a given number of MCS levels of the control signaling. One of these tables may then be selected according to the MCS level actually used for the control signaling and the link adaptation, i.e. in this example the MCS level and its parameters may then be obtained by mapping the bit pattern (to be comprised) in the control signaling indicating the MCS level to corresponding MCS parameters.

According to another embodiment of the invention, modulation scheme information in the control signaling may be omitted, i.e. no bits are needed for the signaling of the modulation scheme (again assuming N possible modulation and coding schemes for the control signaling):
- If the control signaling is transmitted with MCS 1 to n1, QPSK is employed for data transmission
- If the control signaling is transmitted with MCS n1+1 to n2, 16-QAM is employed for data transmission
- If the control signaling is transmitted with MCS n2+1 to N, 64-QAM is employed for data transmission

This exemplary embodiment is illustrated in the subsequent table that has a similar structure as Table 4 above.

**Table 5**

| **MCS of Control Signaling** | **MCS** | **Modulation Scheme Indicator** | **Modulation Scheme** | **Payload Size indicator** | **Code Rate** | **Payload (One RB allocated)** | **Payload (M RBs allocated)** |
|---|---|---|---|---|---|---|---|
| **1 to n1** | 1 | **Not necessary** | QPSK | **00** | 0.2 | 50 | M x 50 |
| **1 to n1** | 2 | **Not** | QPSK | **01** | 0.4 | 100 | M x 100 |
| **1 to n1** | 3 | **Not necessary** | QPSK | 10 | 0.6 | 150 | M x 150 |
| **1 to n1** | 4 | **Not necessary** | QPSK | 11 | 0.8 | 200 | M x 200 |
| **n1+1 to n2** | 5 | **Not necessary** | 16-QAM | 00 | 0.5 | 250 | M x 250 |
| **n1+1 to n2** | 6 | **Not necessary** | 16-QAM | **01** | 0.6 | 300 | M x 300 |
| **n1+1 to n2** | 7 | **Not** necessary | 16-QAM | **10** | 0.7 | 350 | M x 350 |
| **n1+1 to n2** | 8 | **Not necessary** | 16-QAM | 11 | 0.8 | 400 | M x 400 |
| **n2+1 to N** | 9 | **Not necessary** | 64-QAM | 00 | 0.6 | 450 | M x 450 |
| **n2+1 to N** | 10 | **Not necessary** | 64-QAM | 01 | 0.7 | 525 | M x 525 |
| **n2+1 to N** | 11 | **Not necessary** | 64-QAM | 10 | 0.8 | 600 | M x 600 |
| **n2+1 to N** | 12 | **Not necessary** | 64-QAM | 11 | 0.9 | 675 | M x 675 |

In this exemplary embodiment, only 2 bits (instead of 4 bits in Table 2) are needed to signal modulation scheme and code rate, if the bit pattern is interpreted depending on the link adaptation of the control signaling. Here, no indication of the modulation scheme may be signaled.

In case the modulation scheme for the control signaling is not known to the receiving entity, the receiving entity may perform a blind detection of the modulation and coding scheme of the control signaling. One example for blind detection is that the receiver (mobile station) demodulates the received signal and tries to decode the control signaling using the different used the available modulation and coding schemes that may be apply to the control signaling by the transmitting entity. A mechanism for blind detection for use in one embodiment of the invention is similar to that specified in sections 4.3.1 and Annex A in 3GPP TR 25.212: "Multiplexing and channel coding (FDD)", Release 7, v. 7.1.0, June 2006 and in 3GPP TSG-RAN WG1 #44 R1-060450, "Further details on HS-SCCH-less operation for VolP traffic", February 2006 or 3GPP TSG-RAN WG1 #44bis R1-060944 "Further Evaluation of HS-SCCH-less operation", March 2006 (all three documents available at http://www.3gpp.org and being incorporated herein by reference).

In another embodiment of the invention, the modulation scheme and payload size is signaled jointly. For example, the 12 defined MCS levels in Table 2 are signaled by 4 bits indicating MCS levels 1 to 12 with respective modulation scheme and payload size. This may for example be implemented by utilizing the following concepts to reduce the MCS signaling bits - it should be noted that the applicability of the defined options depends also on the number of link adaptation/MCS schemes defined for the control signaling.

One exemplary implementation yields the use of 3 bits for MCS signaling (Joint MCS Indicator):
- If the control signaling is transmitted with MCS 1 to n, the 3 bits indicate MCS levels 1 to 8.
- If the control signaling is transmitted with MCS n to N, the 3 bits indicate MCS levels 5 to 12.

**Table 6**

| **MCS of Control Signaling** | | **MCS** | **Joint MCS Indicator** | | **Modulation Scheme** | **Code Rate** | **Payload (One RB allocated)** | **Payload (M RBs allocated)** |
|---|---|---|---|---|---|---|---|---|
| **1 to n** | | 1 | **000** | | QPSK | 0.2 | 50 | M x 50 |
| **1 to n** | | 2 | **001** | | QPSK | 0.4 | 100 | M x 100 |
| **1 to n** | | 3 | **010** | | QPSK | 0.6 | 150 | M x 150 |
| **1 to n** | | 4 | **011** | | QPSK | 0.8 | 200 | M x 200 |
| **1 to n** | **n+1 to N** | 5 | **100** | **000** | 16-QAM | 0.5 | 250 | M x 250 |
| **1 to n** | **n+1 to N** | 6 | **101** | **001** | 16-QAM | 0.6 | 300 | M x 300 |
| **1 to n** | **n+1 to N** | 7 | **110** | **010** | 16-QAM | 0.7 | 350 | M x 350 |
| **1 to n** | **n+1 to N** | 8 | **111** | **011** | 16-QAM | 0.8 | 400 | M x 400 |
| **n+1 to N** | | 9 | **100** | | 64-QAM | 0.6 | 450 | M x 450 |
| **n+1 to N** | | 10 | **101** | | 64-QAM | 0.7 | 525 | M x 525 |
| **n+1 to N** | | 11 | **110** | | 64-QAM | 0.8 | 600 | M x 600 |
| **n+1 to N** | | 12 | **111** | | 64-QAM | 0.9 | 675 | M x 675 |

According to other embodiments of the invention, only 2 bits for MCS signaling are needed. In a first variant the following mapping rules are defined:
- If the control signaling is transmitted with MCS 1 to n1, the 2 bits indicate MCS levels 1 to 4.
- If the control signaling is transmitted with MCS n1+1 to n2, the 2 bits indicate MCS levels 5 to 8.
- If the control signaling is transmitted with MCS n2+1 to N, the 2 bits indicate MCS levels 9 to 12.

In a second alternative variant the following mapping rules also allow for using 2 bits only for MCS signaling:
- If the L1/L2 control signaling is transmitted with MCS 1 to n1, the 2 bits indicate MCS levels 1 to 4.
- If the L1/L2 control signaling is transmitted with MCS n1+1 to n2, the 2 bits indicate MCS levels 4 to 7.
- If the L1/L2 control signaling is transmitted with MCS n2+1 to n3, the 2 bits indicate MCS levels 7 to 10.
- If the L1/L2 control signaling is transmitted with MCS n3+1 to N, the 2 bits indicate MCS levels 9 to 12.

Hence, as can be seen from the above mapping schemes, the number of control signaling MCS ranges to be defined for the mapping rules depends on the number of bits for indicating the MCS level for the user data. If n bits should be used for the MCS level for the user data and there are N MCS levels defined for the user data, the MCS levels for control signaling may be divided in *ceil(N*/*2ⁿ)* ranges, if no overlapping MCS levels for the user data is desired (ceil() = ceiling function). If an overlapping of MCS levels for the user data is desired, at least *ceil(N*/*2ⁿ)* ranges need to be defined for the MCS levels for control signaling.

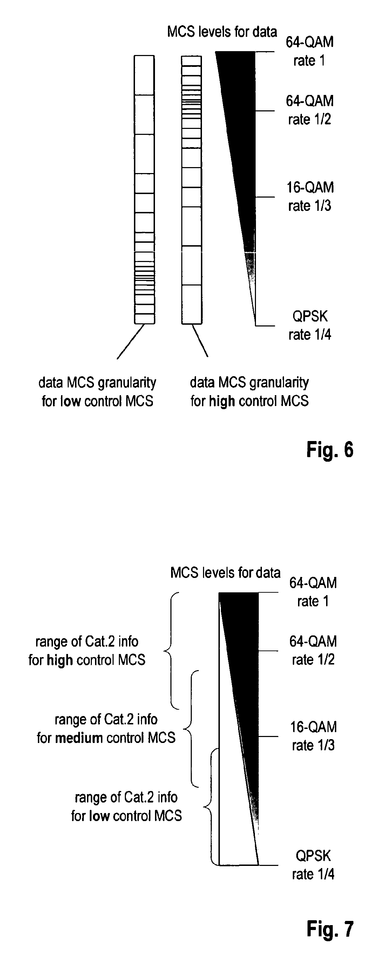

It should be noted that in this exemplary variant, the MCS levels of the individually defined ranges overlap. Hence, according to one exemplary implementation concept, overlapping MCS ranges may be defined for the control signaling that yield a certain range of MCS levels for the user data. This idea is illustrated in Fig. 7 showing an illustrative example of a definition of different ranges of MCS levels in response to the modulation and coding scheme used for L1/L2 control signaling according to one embodiment of the invention.

A similar mapping concept may be defined to reduce the number of MCS signaling overhead to 1 bit only. This case is illustrated for exemplary purposes in Table 7 below.

**Table 7**

| **MCS of Control Signaling** | **MCS** | **Modulation Scheme Indicator** | **Modulation Scheme** | **Payload Size Indicator** | **Resulting Code Rate** | **Payload (One RB allocated)** | **Payload (M RBs allocated)** |
|---|---|---|---|---|---|---|---|
| **1 to n1** | 1 | **Not necessary** | QPSK | 0 | 0.2 | 50 | M x 50 |
| **1 to n1** | 2 | **Not necessary** | QPSK | 1 | 0.4 | 100 | M x 100 |
| **n1+1 to n2** | 3 | **Not necessary** | QPSK | 0 | 0.6 | 150 | M x 150 |
| **n1+1 to n2** | 4 | **Not necessary** | QPSK | 1 | 0.8 | 200 | M x 200 |
| **n2+1 to n3** | 5 | **Not necessary** | 16-QAM | 0 | 0.5 | 250 | M x 250 |
| **n2+1 to n3** | 6 | **Not necessary** | 16-QAM | 1 | 0.6 | 300 | M x 300 |
| **n3+1 to n4** | 7 | **Not necessary** | 16-QAM | 0 | 0.7 | 350 | M x 350 |
| **n3+1 to n4** | 8 | **Not necessary** | 16-QAM | 1 | 0.8 | 400 | M x 400 |
| **n4+1 to n5** | 9 | **Not necessary** | 64-QAM | 0 | 0.6 | 450 | M x 450 |
| **n4+1 to n5** | 10 | **Not necessary** | 64-QAM | 1 | 0.7 | 525 | M x 525 |
| **n5+1 to N** | 11 | **Not necessary** | 64-QAM | 0 | 0.8 | 600 | M x 600 |
| **n5+1 to N** | 12 | **Not necessary** | 64-QAM | 1 | 0.9 | 675 | M x 675 |

In a further embodiment of the invention, the amount of bits indicating the payload size (or code rate) can be reduced since it is not required to signal the full range of all available payload sizes (or code rates). Instead, only part of the available payload sizes (or code rates) may be indexed. This allows using fewer bits for signaling the payload size (or code rate). Typically, in this case also the modulation scheme does not need to be signaled as shown in Table 7.

In Table 2 and Table 4 to Table 7 above, it has been assumed for exemplary purposes only that 12 different MCS levels are defined. Of course the number of MCS levels may be higher (or lower) and the mappings depending on the link adaptation for the control signaling defined above may be varied according to the number of MCS levels for the user data. It should be further noted, that the examples relating to the different tables described above show a simplification in order to show the general concept.

In most embodiments of the invention described so far, it has been assumed for exemplary purposes that the control signaling is subject to adaptive modulation and coding as a link adaptation scheme. Alternatively (or in addition), according to some embodiments of the invention, transmission power control may be used for link adaptation for the control signaling. In case the control signaling is power-controlled, the schemes described above are similarly applicable. Instead of depending the interpretation of the Cat. 2 information dependent on the modulation and coding scheme of the control signaling, the interpretation may be dependent on the transmit power level used for transmitting the control signaling.

For example, the power level might be associated to a certain power level range and the interpretation of the Cat. 2 information may depend on a power level range used for the control signaling. In this case, additional information on the transmitted power level may be signaled to the receiving entity, since the receiving entity may receive and decode the control signaling correctly without knowing the transmit power level. Therefore, the receiving entity may either be informed separately on the transmit power level of the control signaling or alternatively try to estimate the transmit power level itself.

As has been indicated above, another aspect of the invention is to vary the granularity of link adaptations in a set of link adaptations that defines the link adaptations that can be used for user data transmission according to at least one link adaptation parameter used for transmitting the control signaling. In a further embodiment of the invention it is therefore suggested that the granularity of the MCS levels depends on the MCS/power level of the control signaling. Accordingly, Fig. 6 shows an illustrative example for adjusting the MCS granularity for user data transmissions depending on the modulation and coding scheme used for L1/L2 control signaling according to an embodiment of the invention that obeys the following rules:
- If the control signaling is transmitted with MCS 1 to n (low MCS levels), the MCS granularity is fine for low MCS levels and coarse for high MCS levels.
- If the control signaling is transmitted with MCS n+1 to N (high MCS levels) the MCS granularity is coarse for low MCS levels and fine for high MCS levels.

The MCS table according to Table 8 below exemplarily illustrates how a fine MCS granularity for low MCS levels and coarse MCS granularity for high MCS levels could look like.

**Table 8**

| **MCS of Control Signaling** | **MCS** | **Joint MCS Indicator** | **Modulation Scheme** | **Code Rate** | **Payload (One RB allocated)** | **Payload (M RBs allocated)** |
|---|---|---|---|---|---|---|
| **1 to n** | **1-1** | 0000 | QPSK | 0.2 | 50 | M x 50 |
| **1 to n** | **2-1** | 0001 | QPSK | 0.3 | 75 | M x 75 |
| **1 to n** | **3-1** | 0010 | QPSK | 0.4 | 100 | M x 100 |
| **1 to n** | **4-1** | 0011 | QPSK | 0.5 | 125 | M x 125 |
| **1 to n** | **5-1** | 0100 | QPSK | 0.6 | 150 | M x 150 |
| **1 to n** | **6-1** | 0101 | QPSK | 0.7 | 175 | M x 175 |
| **1 to n** | **7-1** | 0110 | QPSK | 0.8 | 200 | M x 200 |
| **1 to n** | **8-1** | 0111 | 16-QAM | 0.5 | 250 | M x 250 |
| **1 to n** | **9-1** | 1000 | 16-QAM | 0.6 | 300 | M x 300 |
| **1 to n** | **10-1** | 1001 | 16-QAM | 0.7 | 350 | M x 350 |
| **1 to n** | **11-1** | 1010 | 16-QAM | 0.8 | 400 | M x 400 |
| **1 to n** | **12-1** | 1011 | 64-QAM | 0.8 | 600 | M x 600 |

For a coarse MCS granularity for low MCS levels and fine granularity for high MCS levels the MCS table according to Table 9 (see below) may be employed:

**Table 9**

| **MCS of Control Signaling** | **MCS** | **Joint MCS Indicator** | **Modulation Scheme** | **Code Rate** | **Payload (One RB allocated)** | **Payload (M RBs allocated)** |
|---|---|---|---|---|---|---|
| **n+1 to N** | **1-2** | 0000 | QPSK | 0.5 | 125 | M x 125 |
| **n+1 to N** | **2-2** | 0001 | 16-QAM | 0.4 | 200 | M x 200 |
| **n+1 to N** | **3-2** | 0010 | 16-QAM | 0.5 | 250 | M x 250 |
| **n+1 to N** | **4-2** | 0011 | 16-QAM | 0.6 | 300 | M x 300 |
| **n+1 to N** | **5-2** | 0100 | 16-QAM | 0.7 | 350 | M x 350 |
| **n+1 to N** | **6-2** | 0101 | 16-QAM | 0.8 | 400 | M x 400 |
| **n+1 to N** | **7-2** | 0110 | 64-QAM | 0.6 | 450 | M x 450 |
| **n+1 to N** | **8-2** | 0111 | 64-QAM | 0.65 | 488 | M x 488 |
| **n+1 to N** | **9-2** | 1000 | 64-QAM | 0.7 | 525 | M x 525 |
| **n+1 to N** | **10-2** | 1001 | 64-QAM | 0.75 | 563 | M x 563 |
| **n+1 to N** | **11-2** | 1010 | 64-QAM | 0.8 | 600 | M x 600 |
| **n+1 to N** | **12-2** | 1011 | 64-QAM | 0.85 | 638 | M x 638 |

As indicated previously, the two aspects of the invention may also be combined with one another. Accordingly, the embodiments of the invention relating the aspect of interpreting the content of control signaling for the transmission of user data depending on at least one parameter of the link adaptation used for transmitting the control signaling may be combined with embodiments of the invention providing a varying granularity of the link adaptation levels depending on the link adaptation used for the control signaling, e.g. each MCS table described above may cover only part of all MCS levels available for transmitting user data.

According to another embodiment of the invention the content of the MCS tables, i.e. the modulation schemes and payload sizes mapped to the MCS signaling bits, may be predefined, may be broadcasted to the mobile stations within a service area or radio cell or may be configured per mobile station.

In a further embodiment of the invention the control signaling information may also contain MIMO related information. Therefore, also the interpretation of MIMO related information may depend on the link adaptation (MCS level, transmission power, MIMO scheme etc.) of the control signaling. In another embodiment of the invention also Cat. 3 information may depend on the link adaptation of the control signaling

Another embodiment of the invention relates to situations where Cat. 1 (i.e. scheduling related control information), Cat. 2 and Cat. 3 information (i.e. transmission format/link adaptation related information) are encoded separately as shown in Fig. 8 and Fig. 9. In this case different MCS levels may be applied to the transmission of the Cat. 1 and Cat. 2/3 information. Therefore, the content of the Cat. 2 information could depend on either the link adaptation (MCS level, transmission power, etc.) used for transmitting the Cat. 1 information, the link adaptation used for Cat. 2/3 information or a combination of these two options.

Further, in another embodiment of the invention the size of the Cat. 2/3 control information may depends on the link adaptation used for transmission of the Cat. 1 information, e.g. if a high MCS level is used for Cat. 1 information, the number of bits for Cat. 2/3 information in the control signaling may be increased in comparison to the opposite case of using a low MCS level for Cat. 1 information, and vice versa. Alternatively, the resources used for transmitting the Cat. 2/3 information may be smaller when using a high MCS level for Cat. 1 information compared to using a low MCS level for the Cat. 1 information.

According to another embodiment of the invention the MCS level of the Cat. 2 and/or Cat. 3 control information may depend on the MCS level used for transmission of the Cat. 1 information. E.g. if an MCS level *n*₁ to *n*₂ used for Cat. 1 information and MCS level *m*₁ to *m*₂ used for Cat. 2/3 information.

In a further embodiment of the invention the location of the Cat. 2 and/or Cat. 3 control information within a subframe (or TTI) depends on the MCS level used for transmission of the Cat. 1 information. For example, the Cat. 2 and/or Cat. 3 control information may either be mapped in a distributed or in a localized way depending on the MCS level used for transmission of the Cat. 1 information. In another example, if a mobile station is allocated on multiple resource blocks, the Cat. 2 and/or Cat. 3 control information may either be mapped within a single allocated resource block to a given mobile station or it may be mapped across multiple allocated resource blocks depending on the MCS level used for transmission of the Cat. 1 information.

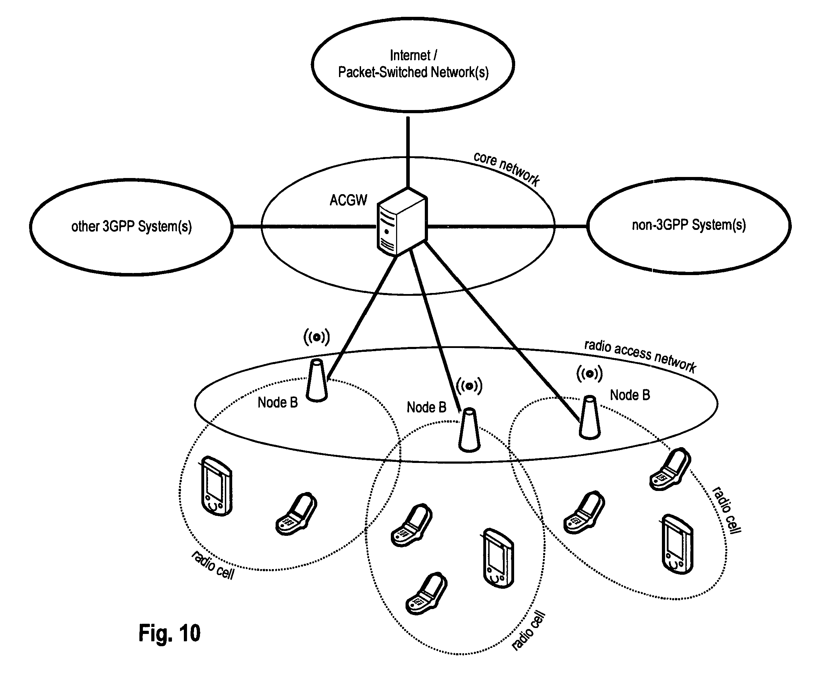

Further, it should be noted that the concepts of the invention outlined in various exemplary embodiments herein may be advantageously used in a mobile communication system as exemplified in Fig. 10. The mobile communication system may have a "two node architecture" consisting of at least one Access and Core Gateway (ACGW) and Node Bs. The ACGW may handle core network functions, such as routing calls and data connections to external networks, and it may also implement some RAN functions. Thus, the ACGW may be considered as to combine functions performed by GGSN and SGSN in today's 3G networks and RAN functions as for example radio resource control (RRC), header compression, ciphering/integrity protection and outer ARQ. The Node Bs may handle functions as for example segmentation/concatenation, scheduling and allocation of resources, multiplexing and physical layer functions. For exemplary purposes only, the eNodeBs are illustrated to control only one radio cell. Obviously, using beam-forming antennas and/or other techniques the eNodeBs may also control several radio cells or logical radio cells.

In this exemplary network architecture, a shared data channel may be used for communication on uplink and/or downlink on the air interface between mobile stations (UEs) and base stations (eNodeBs). This shared data channel may have a structure as shown in Fig. 1, i.e. may be viewed as a concatenation of subframes as exemplarily depicted in Fig. 2 or Fig. 3. According to an exemplary embodiment of the invention, the shared data channel may be defined as in the Technological Background section herein, as in 3GPP TR 25.814 or as the HS-DSCH as specified in 3GPP TS 25.308: "High Speed Downlink Packet Access (HSDPA); Overall description; Stage 2", v. 5.3.0, December 2002, available at http://www.3gpp.org and incorporated herein by reference.

According to one exemplary scenario the control signaling is related to uplink user data. Cat. 1, Cat. 2 and Cat. 3 information may thus be signaled from a base station to one or more mobile stations on downlink. Thereby the base station defines location and transport format (MCS level, MIMO, etc.) of uplink data transmission.

In an alternative scenario the Cat. 1 information may be signaled on downlink and Cat. 2 and Cat. 3 information may be signaled on uplink. In this exemplary scenario the base station defines only location of uplink transmission, while the mobile station defines transport format (e.g. MCS level) for its uplink data transmission. The base station may then define/interpret the Cat. 2 information transmitted on uplink depending on the MCS used for the Cat. 1 information transmitted in downlink.

In some embodiments of the invention the control signaling is related to the scheduling, transport format and/or HARQ parameters of user data. Moreover, in some embodiments of the invention the user data and the related control signaling are transmitted via a downlink channel.

In some further embodiments of the invention the user data and/or the related control signaling is transmitted via a downlink shared channel. In alternative embodiments of the invention, the user data is transmitted via an uplink channel and the related control signaling is transmitted via a downlink channel.

For communication in the mobile communication system for example an OFDM scheme, a MC-CDMA scheme or an OFDM scheme with pulse shaping (OFDM/OQAM) may be used.

To summarize, tailoring of MCS tables for the data transmission depending on the MCS level used for the control information may have the following benefits. In some implementations suggested herein a reduction of L1/L2 control signaling (e.g. by reducing signaling bits for modulation scheme and/or payload size) may be realized. Optimizing the L1/L2 control signaling of Table 3, the Cat. 2 information can be reduced by 36% (14 to 9 bits) by omitting modulation scheme bits and reducing payload size bits to 3. Furthermore, the reduction of L1/L2 control signaling, may lead to more resources available for data transmission, which may in turn lead to a higher system throughput. Improving the granularity of the data MCS levels by defining tailored MCS tables (e.g. according to Table 8 and Table 9) may lead to a more accurate MCS selection, i.e. better data-rate adaptation to the channel state, which in turn may lead to a higher system throughput.

Another embodiment of the invention relates to the implementation of the above described various embodiments using hardware and software. It is recognized that the various embodiments of the invention may be implemented or performed using computing devices (processors). A computing device or processor may for example be general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

In the previous paragraphs various embodiments of the invention and variations thereof have been described. It would be appreciated by a person skilled in the art that numerous variations and/or modifications may be made to the present invention as shown in the specific embodiments without departing from the spirit or scope of the invention as broadly described.

It should be further noted that most of the embodiments have been outlined in relation to a 3GPP-based communication system and the terminology used in the previous sections mainly relates to the 3GPP terminology. However, the terminology and the description of the various embodiments with respect to 3GPP-based architectures is not intended to limit the principles and ideas of the inventions to such systems.

Also the detailed explanations given in the Technical Background section above are intended to better understand the mostly 3GPP specific exemplary embodiments described herein and should not be understood as limiting the invention to the described specific implementations of processes and functions in the mobile communication network. Nevertheless, the improvements proposed herein may be readily applied in the architectures described in the Technological Background section. Furthermore the concept of the invention may be also readily used in the LTE RAN currently discussed by the 3GPP.

## Claims

1. A method comprising the step of:
interpreting information on at least one link adaptation parameter for transmitting the user data to determine said at least one link adaptation parameter for transmitting the user data, wherein the at least one link adaptation parameter for transmitting the user data is comprised in control signaling and
wherein the interpretation of said information depends on at least one link adaptation parameter employed for transmitting the control signaling.

2. The method according to claim 1, further comprising the steps of:
receiving said control signaling comprising information on the at least one link adaptation parameter for transmitting the user data at a receiving entity, and
receiving at the receiving entity or transmitting by the receiving entity the user data using the determined at least one link adaptation parameter for transmitting the user data.

3. The method according to claim 1 or 2, further comprising the step of receiving control data comprising link adaptation information defining the at least one link adaptation parameter employed for transmitting the control signaling.

4. The method according to claim 1 or 2, further comprising the step of performing a blind detection of the at least one link adaptation parameter for transmitting the control signaling at a receiving entity.

5. The method according to one of claims 1 to 4, wherein the at least one link adaptation parameter for transmitting the user data comprises at least one of:
- at least one adaptive modulation and coding scheme parameter,
- a payload size parameter,
- at least one transmission power control parameter,
- at least one MIMO parameter and
- at least one hybrid automatic repeat request parameter.

6. The method according to claim 5, wherein the at least one adaptive modulation and coding scheme parameter indicates the modulation scheme and the coding rate used for transmitting the user data.

7. The method according to claim 6, wherein the modulation scheme and the coding rate or payload size are jointly encoded in a single bit pattern within the control signaling.

8. The method according to one of claims 1 to 7, wherein the at least one link adaptation parameter employed for transmitting the control signaling is the modulation and coding scheme and/or the transmission power level used for transmitting the control signaling.

9. The method according to one of claims 1 to 8, wherein the control signaling comprises a bit pattern indicating the at least one link adaptation parameter for transmitting the user data and
the method further comprises the step of mapping the bit pattern to link adaptation parameters usable for transmitting said user data to the receiving entity, wherein the mapping depends on the at least one link adaptation parameter employed for transmitting the control signaling.

10. The method according to one of claims 1 to 9, wherein plural link adaptation tables or equations are maintained at a receiving entity and/or transmitting entity, wherein each link adaptation table or equation defines the mapping of available bit patterns to link adaptation parameters usable for transmitting the user data, wherein the mapping depends on the at least one link adaptation parameter employed for transmitting the control signaling.

11. The method according to claim 10, wherein the step of mapping the bit pattern to link adaptation parameters usable for transmitting said user data is performed according to a selected one of the plural link adaptation tables or equations for determining said at least one link adaptation parameter, wherein the selection of the link adaptation table or equation depends on the at least one link adaptation parameter employed for transmitting control signaling.

12. The method according to one of claims 9 to 11, wherein the values representable by the bit pattern cover only a subset of all possible sets of the at least on link adaptation parameter for transmitting the user data, wherein the covered subset depends on the at least one link adaptation parameter used for transmitting the control signaling.

13. The method according to one of claims 9 to 12, wherein the at least one link adaptation parameter for transmitting the control signaling is the modulation and coding scheme used for transmitting the control signaling and
wherein the bit pattern in the control signaling is mapped to link adaptation parameters covering a range of spectral efficiencies for the transmission of the user data similar or higher than the spectral efficiency yielded by the modulation and coding scheme for transmitting the control signaling.

14. The method according to one of claims 9 to 13, wherein a link adaptation table or equation defining said mapping of a respective bit pattern to respective usable link adaptation parameters comprises a given number of mappings and
wherein the granularity of the step size between spectral efficiencies yielded by a first mapping and another second mapping out of plural mappings covering a range of spectral efficiencies for the transmission of the user data around the spectral efficiency yielded by the modulation and coding scheme for transmitting the control signaling is higher than that for mappings to link adaptation parameters for the transmission of the user data outside said range.

15. The method according to one of claims 9 to 13, wherein a link adaptation table or equation defining said mapping of a respective bit pattern to respective usable link adaptation parameters comprises a given number of mappings and
wherein the granularity of the step size between spectral efficiencies yielded by a first mapping and another second mapping out of plural mappings covering a range of spectral efficiencies for the transmission of the user data around the spectral efficiency yielded by the modulation and coding scheme for transmitting the control signaling is lower than that for mappings to link adaptation parameters for the transmission of the user data outside said range.

16. The method according to one of claims 1 to 15, wherein the control signaling is related to the scheduling, transport format and/or HARQ parameters of user data.

17. The method according to one of claims 1 to 16, wherein the user data and the related control signaling is transmitted via a downlink channel.

18. The method according to one of claims 1 to 16, wherein the user data and/or the related control signaling is transmitted via a downlink shared channel.

19. The method according to one of claims 1 to 16, wherein the user data is transmitted via an uplink channel and the related control signaling is transmitted via a downlink channel.

20. The method according to one of claims 1 to 19, wherein an OFDM scheme, a MC-CDMA scheme or an OFDM scheme with pulse shaping (OFDM/OQAM) is used for communication in the mobile communication system.

21. An apparatus comprising a processing unit for interpreting information on at least one link adaptation parameter for transmitting the user data to determine said at least one link adaptation parameter for transmitting the user data, wherein the at least one link adaptation parameter for transmitting the user data is comprised in control signaling and
wherein processing unit is operable to interpret said information dependent on at least one link adaptation parameter employed for transmitting the control signaling.

22. The apparatus according to claim 21, further comprising:
a receiver for receiving said control signaling comprising information on the at least one link adaptation parameter for transmitting the user data at a receiving entity, and for the user data using the determined at least one link adaptation parameter for transmitting the user data.

23. The apparatus according to claim 21, further comprising:
a receiver for receiving said control signaling comprising information on the at least one link adaptation parameter for transmitting the user data at a receiving entity, and
a transmitter for transmitting the user data using the determined at least one link adaptation parameter for transmitting the user data.

24. The apparatus according to one of claims 21 to 23, wherein the apparatus is a base station or a mobile terminal.

25. The apparatus according to one of claims 21 to 24, further comprising means for performing the steps of the method according to one of claims 1 to 20.

26. A computer-readable medium storing instructions that, when executed by a processor of an apparatus, cause the apparatus to interpret information on at least one link adaptation parameter for transmitting the user data to determine said at least one link adaptation parameter for transmitting the user data, wherein the at least one link adaptation parameter for transmitting the user data is comprised in control signaling and
wherein the interpretation of said information depends on at least one link adaptation parameter employed for transmitting the control signaling.

27. The computer-readable medium according to claim 26, further storing instructions that when executed by the processor cause the apparatus to perform the steps of the method according to one of claims 1 to 20.
